# EUROPÄISCHE PATENTANMELDUNG

(11) **EP 3 015 036 A1**
(43) Veröffentlichungstag der Anmeldung: **04.05.2016**
(21) Anmeldenummer: 15189274.2
(22) Anmeldetag: 12.10.2015
(51) Int. Cl.: A47J 43/07

(54) **KÜCHENMASCHINE**

(30) Priorität: 29.10.2014 DE 102014115744
(71) Anmelder: Vorwerk & Co. Interholding GmbH, 42275 Wuppertal (DE)
(72) Erfinder: Starflinger, Frank, 44793 Bochum (DE)
(74) Vertreter: Müller, Enno

(57) **Zusammenfassung**

Die Erfindung betrifft eine Küchenmaschine (1), insbesondere ein Mixgerät, aufweisend ein Basisgerät (2) und ein daran anordenbares Gefäß (3), wobei die Küchenmaschine (1) eine Positionierungseinrichtung (8) zur Positionierung eines ersten Teilbereiches (6) der Küchenmaschine (1) relativ zu einem zweiten Teilbereich (7) der Küchenmaschine (1) aufweist. Für eine vorteilhafte Überwachung einer Positionierung wird vorgeschlagen, dass der Positionierungseinrichtung (8) eine optische Messeinrichtung mit einem Lichtsender (9) und einem Lichtempfänger (10) zugeordnet ist, welche so an dem ersten Teilbereich (6) und/oder dem zweiten Teilbereich (7) angeordnet sind, dass die von dem Lichtempfänger (10) gemessene Lichtintensität in Abhängigkeit von der Positionierung des ersten Teilbereiches (6) relativ zu dem zweiten Teilbereich (7) variiert.

## Beschreibung

Die Erfindung betrifft eine Küchenmaschine, insbesondere ein Mixgerät, aufweisend ein Basisgerät und ein daran anordenbares Gefäß, wobei die Küchenmaschine eine Positionierungseinrichtung zur Positionierung eines ersten Teilbereiches der Küchenmaschine relativ zu einem zweiten Teilbereich der Küchenmaschine aufweist.

Küchenmaschinen mit Positionierungseinrichtungen sind im Stand der Technik bekannt. Diese dienen bspw. dazu, einen Deckel relativ zu einem Gefäß so zu positionieren, dass ein bestmöglicher Verschluss zwischen Gefäß und Deckel erreicht werden kann. Ebenso existieren auch Positionierungseinrichtungen zur Positionierung des Gefäßes relativ zu dem Basisgerät.

Bekannt sind bspw. Küchenmaschinen, bei welchen die Positionierungseinrichtung formschlüssig korrespondierende erste und zweite Teilbereiche an dem Basisgerät und dem Gefäß bzw. an dem Gefäß und dem Deckel aufweist. Bei einer Positionierung werden der erste und der zweite Teilbereich entweder manuell durch den Nutzer der Küchenmaschine oder durch die Gewichtskraft des Gefäßes bzw. des Deckels in die gewünschte Position gebracht.

Die Druckschrift EP 2 698 088 A1 offenbart bspw. eine Küchenmaschine mit einem Gargefäß und einem Deckel für das Gargefäß, wobei der Deckel in einer Verschlussstellung gegen das Gargefäß verriegelbar ist. Die Wandung des Gefäßes weist einen radial auskragenden Gefäßrand auf, an welchem ein Deckelrand anordenbar ist. Dem Gefäßrand und dem Deckelrand ist ein Verriegelungsteil der Küchenmaschine zugeordnet, welches zur Verriegelung von Gefäß und Deckel von einer Freigabestellung in eine Verriegelungsstellung verlagerbar ist. Sofern der Deckel zur Erreichung einer optimalen Verriegelung nicht in einer geeigneten Position relativ zu dem Gefäß angeordnet ist, wird der Deckel von dem Verriegelungsteil in die für die Verriegelung benötigte Position gezogen bzw. gedrängt. In diesem Zusammenhang ist der Deckel ein erster Teilbereich der Küchenmaschine, während das Gefäß einen zweiten Teilbereich der Küchenmaschine darstellt.

Alternativ kann ebenso das Gefäß ein erster Teilbereich der Küchenmaschine sein, während eine Gefäßaufnahme den zweiten Teilbereich der Küchenmaschine darstellt. Auch ein bei Bedarf an die Küchenmaschine ankoppelbares Teil, wie bspw. eine Waage oder ein Vorratsbehälter, kann ein erster Teilbereich der Küchenmaschine sein, während eine entsprechende Aufnahme zur Halterung der Waage oder des Vorratsbehälters den zweiten Teilbereich der Küchenmaschine bildet.

Problematisch bei den vorgenannten Positionierungseinrichtungen ist, dass die Qualität des Verschlusses von beispielsweise Gefäß und Deckel durch die Genauigkeit des Ineinandergreifens des ersten und zweiten Teilbereiches bestimmt wird. Dementsprechend kann es zu einer mehr oder weniger dichten Verriegelung von Gefäß und Deckel kommen. Die Positionierung derartiger Teilbereiche zueinander ist jedoch möglichst präzise erwünscht, um nachfolgende Funktionen, wie etwa das Verriegeln eines Deckels auf einem Gefäß oder das Verriegeln einer Waage an dem Gefäß oder eine Einleitung von Medien in ein angekoppeltes Gefäß möglichst ungehindert und reproduzierbar genau durchführen zu können.

Es ist daher Aufgabe der vorliegenden Erfindung, eine vorteilhafte Überwachung für eine Positionierung eines ersten Teilbereiches der Küchenmaschine relativ zu einem zweiten Teilbereich der Küchenmaschine zu schaffen.

Zur Lösung der vorgenannten Aufgabe wird eine Küchenmaschine vorgeschlagen, bei welcher der Positionierungseinrichtung eine optische Messeinrichtung mit einem Lichtsender und einem Lichtempfänger zugeordnet ist, welche so an dem ersten Teilbereich und/oder dem zweiten Teilbereich angeordnet sind, dass die von dem Lichtempfänger gemessene Lichtintensität in Abhängigkeit von der Positionierung des ersten Teilbereiches relativ zu dem zweiten Teilbereich variiert.

Gemäß der Erfindung erfolgt eine Positionierung des ersten Teilbereiches relativ zu dem zweiten Teilbereich der Küchenmaschine nicht nur rein mechanisch, indem die formschlüssig korrespondierenden Teilbereiche beispielsweise allein aufgrund ihrer Form und Gewichtskraft zueinander positioniert werden. Vielmehr wird die Positionierung der Teilbereiche nun mittels einer optischen Messeinrichtung kontrolliert bzw. überprüft. Die optische Messeinrichtung funktioniert derart, dass die mittels des Lichtempfängers gemessene Lichtintensität als Maß für den Positionierungserfolg der beiden Teilbereiche ausgewertet wird. In dem Falle, dass der erste Teilbereich relativ zu dem zweiten Teilbereich in eine für die Verriegelung optimale Stellung positioniert wurde, kann die gemessene Lichtintensität bspw. gegen Null gehen oder alternativ - je nach der konkreten Anordnung und Ausbildung der optischen Messeinrichtung - einen Maximalwert aufweisen. Beispielsweise können der Lichtsender und der Lichtempfänger im Rahmen einer Lichtschrankenanordnung (z. B. Einweglichtschranke, Reflektionslichtschranke) oder im Rahmen einer optischen Abstandsmesseinrichtung zusammenwirken. Durch die Verwendung einer optischen Messeinrichtung zur Überprüfung der relativen Positionierung des ersten und zweiten Teilbereiches kann ein verbesserter Positionierungserfolg gegenüber den im Stand der Technik bekannten Positionierungseinrichtungen erreicht werden. Es kann somit eine genauere Positionierung von beispielsweise Gefäß und Deckel geschaffen werden, wodurch gleichzeitig auch die Dichtigkeit der Verbindung erhöht wird. Vorteilhaft ist dabei zusätzlich, dass die Qualität der Positionierung unmittelbar anhand der gemessenen Lichtintensität erkannt werden kann.

Es ist vorgesehen, dass der zweite Teilbereich ein Teilbereich des Gefäßes, insbesondere eines Griffes des Gefäßes, ist. Gemäß dieser Ausführungsvariante ist das Gefäß derjenige Teil der Küchenmaschine, an welchem ein erster Teilbereich ausgerichtet wird. Vorteilhaft dient insbesondere der Griff des Gefäßes als zweiter Teilbereich, da dieser von dem Nutzer besonders leicht erkannt werden kann und sich somit als optische (und auch haptische) Markierung anbietet. Zudem kann der Griff aufgrund seiner relativ beliebigen Form hervorragend die optische Messeinrichtung oder zumindest Teile der optischen Messeinrichtung aufnehmen.

Es ist vorgesehen, dass der Lichtsender und/oder der Lichtempfänger an dem zweiten Teilbereich angeordnet ist. Vorteilhaft ist insbesondere, dass sowohl der Lichtsender als auch der Lichtempfänger in demselben Teilbereich der Küchenmaschine, beispielsweise dem Griff des Gefäßes, angeordnet sind, so dass nur eine einzige elektrische Zuleitung erforderlich ist. Dadurch kann die optische Messeinrichtung insgesamt besonders kostengünstig ausgebildet und in die Küchenmaschine implementiert werden. Die optische Messeinrichtung kann beispielsweise als Reflektionslichtschranke so ausgebildet sein, dass ein an dem zweiten Teilbereich angeordnete Lichtsender Licht in den ersten Teilbereich der Küchenmaschine strahlt, woraufhin bei optimaler Positionierung des ersten Teilbereiches zu dem zweiten Teilbereich zumindest ein Teilbetrag des Lichtes von dem ersten Teilbereich zurück an den an dem zweiten Teilbereich angeordneten Lichtempfänger reflektiert wird. Es empfiehlt sich, dass der erste Teilbereich zumindest in dem Auftreffbereich des Lichtes verspiegelt ist. Bei einer unzureichenden Positionierung von erstem und zweitem Teilbereich wird das von dem Lichtsender emittierte Licht dagegen gar nicht oder nur zu einem geringen Teil an dem ersten Teilbereich reflektiert, so dass der zwischen Lichtsender und Lichtempfänger ausgebildete Lichtweg unterbrochen wird und der Lichtempfänger somit gar keine oder nur eine geringe Lichtintensität messen kann. Abhängig von dem Messwert des Lichtempfängers kann somit darauf geschlossen werden, ob der erste Teilbereich optimal zu dem zweiten Teilbereich positioniert wurde oder nicht.

Alternativ zu einer Ausbildung der optischen Messeinrichtung als Lichtschranke sind ebenso auch andere Messanordnungen denkbar. Beispielsweise können der Lichtsender und der Lichtempfänger auch Komponenten einer optischen Abstands-Messeinrichtung sein, wobei der Lichtsender beispielsweise an dem ersten Teilbereich und der Lichtempfänger an dem zweiten Teilbereich angeordnet ist. Abhängig von dem gemessenen Abstand zwischen dem Lichtsender und dem Lichtempfänger kann dann auf die korrekte Positionierung des ersten Teilbereiches zu dem zweiten Teilbereich geschlossen werden.

Es wird vorgeschlagen, dass der erste Teilbereich ein Teilbereich eines das Gefäß verschließenden Deckels ist. Gemäß dieser Ausgestaltung wird der Deckel relativ zu einem zweiten Teilbereich, vorzugsweise dem Gefäß, positioniert. Vorteilhaft kann der Deckel bspw. mit einem entlang seines Umfangs verlaufenden Ring oder alternativ mit einer radial ausgerichteten Rippe ausgestattet sein, welche bei optimaler Positionierung des Deckels relativ zu dem Gefäß bewirkt, dass der Lichtweg zwischen dem Lichtsender und dem Lichtempfänger unterbrochen wird.

Es ist vorgesehen, dass der erste Teilbereich oder der zweite Teilbereich so in den Lichtweg eingreifbar ist, dass die von dem Lichtempfänger gemessene Lichtintensität variiert. Wie zuvor erläutert kann es sich bei dem Lichtweg beispielsweise um den Lichtweg einer Lichtschranken-Anordnung handeln. Die Lichtschranken-Anordnung kann als Einweglichtschranke oder Reflektionslichtschranke ausgebildet sein.

Im Falle einer Einweglichtschranke kann der Lichtsender beispielsweise an einem anderen Teilbereich der Küchenmaschine angeordnet sein als der Lichtempfänger. Zum Beispiel kann der Lichtsender im Bereich des Gefäßes angeordnet sein, während der Lichtempfänger im Bereich des Deckels angeordnet ist. Sofern der Deckel dann nicht korrekt zu dem Gefäß, beispielsweise dessen Griff, positioniert ist, detektiert der Lichtempfänger eine Lichtintensität, so dass darauf geschlossen werden kann, dass der Deckel nicht ordnungsgemäß positioniert ist. Sofern der Deckel die ordnungsgemäße Position erreicht hat, wird der Lichtweg der Lichtschranke unterbrochen, so dass der Lichtempfänger keine Lichtintensität mehr detektiert.

Alternativ kann es sich bei dem Lichtweg um den Lichtweg einer Reflektionslichtschranke handeln. In diesem Fall sind Lichtsender und Lichtempfänger beide gemeinsam entweder an dem ersten Teilbereich der Küchenmaschine oder an dem zweiten Teilbereich der Küchenmaschine angeordnet. Der Teilbereich, welcher weder den Lichtsender noch den Lichtempfänger aufweist, dient bei optimaler Positionierung von erstem und zweitem Teilbereich als Reflektionsfläche, welche das von dem Lichtsender emittierte Licht reflektieren kann, so dass dieses von dem Lichtempfänger gemessen werden kann. Sofern erster und zweiter Teilbereich nicht wie gewünscht zueinander ausgerichtet sind, wird das von dem Lichtsender emittierte Licht nicht zu dem Lichtempfänger zurückreflektiert. Alternativ ist es auch möglich, dass das Eingreifen des Teilbereiches in den Lichtweg eine Abschirmung des Lichtes von einer verspiegelten Fläche bewirkt, so dass das Licht nicht zurückreflektiert werden kann und die von dem Lichtempfänger gemessene Lichtintensität somit gegen Null geht. Infolgedessen kann auf die korrekte Positionierung geschlossen werden.

Es wird vorgeschlagen, dass der Lichtweg durch mindestens einen Lichtleiter, insbesondere eine optische Faser, vorgegeben ist, wobei dem Lichtleiter ein Öffnungsspalt zugeordnet ist, in welchen der erste Teilbereich oder der zweite Teilbereich eingreifbar ist. Gemäß dieser Ausgestaltung wird das von dem Lichtsender emittierte Licht in einen Lichtleiter eingekoppelt und dann innerhalb des Lichtleiters geführt, so dass eine auf dem Lichtweg auftretende Lichtstreuung reduziert werden kann. Insbesondere propagiert das emittierte Licht gebündelt durch den Lichtleiter, so dass sich die Lichtintensität über die Länge des Lichtleiters nicht wesentlich ändert. Im Bereich der Eintritts- bzw. Austrittsöffnungen des Lichtleiters bzw. der Lichtleiter können Linsen angeordnet sein, um das von dem Lichtsender emittierte Licht besonders verlustarm in den Lichtleiter einzukoppeln bzw. auszukoppeln. Bevorzugt ist dem Lichtleiter ein Öffnungsspalt zugeordnet, in welchen ein erster Teilbereich oder zweiter Teilbereich der Küchenmaschine eingreifen kann. Der Öffnungsspalt kann bspw. hinter der Austrittsöffnung des Lichtleiters angeordnet sein. Sobald der erste Teilbereich bspw. in den zwischen Lichtleiter und zweitem Teilbereich ausgebildeten Öffnungsspalt eingreift, wird der unterbrochen, so dass der Lichtempfänger kein Licht mehr empfangen kann. Dadurch kann auf die Anwesenheit des ersten Teilbereiches in der gewünschten Position geschlossen werden.

Besonders vorteilhaft kann der Lichtweg durch zwei Lichtleiter vorgegeben sein, welche eine gemeinsame optische Achse aufweisen und durch den Öffnungsspalt voneinander beabstandet sind. Grundsätzlich können die beiden Lichtleiter dabei sowohl in demselben Teilbereich der Küchenmaschine als auch in unterschiedlichen Teilbereichen angeordnet sein. Sofern beispielsweise ein erster Lichtleiter in dem ersten Teilbereich und ein zweiter Lichtleiter in dem zweiten Teilbereich angeordnet ist, kann der Öffnungsspalt durch den zwischen dem ersten Teilbereich und dem zweiten Teilbereich ohnehin ausgebildeten Spalt geformt sein. Sofern beide Lichtleiter dagegen in demselben Teilbereich der Küchenmaschine, bspw. dem Griff eines Gefäßes, angeordnet sind, kann dieser Teilbereich eine Materialaussparung aufweisen, welche die beiden Lichtleiter voneinander trennt und somit den Öffnungsspalt ausbildet.

Alternativ zu der Anordnung eines oder mehrerer Lichtleiter kann es vorgesehen sein, dass der Lichtweg durch eine das von dem Lichtsender emittierte Licht reflektierende Wandung des ersten Teilbereiches oder des zweiten Teilbereiches vorgegeben ist, wobei der Wandung ein Öffnungsspalt zugeordnet ist, in welchen der zweite Teilbereich oder der erste Teilbereich eingreifbar ist. Gemäß dieser Ausgestaltung wird der Lichtweg durch eine Verspiegelung der Wandung des ersten und/oder zweiten Teilbereichs der Küchenmaschine vorgegeben. Beispielsweise kann der an dem Gefäß angeordnete Griff einen kanalförmigen Hohlraum aufweisen, dessen Wandung verspiegelt ist, so dass das von dem Lichtsender emittierte Licht - je nach dessen Eintrittswinkel in den Hohlraum - reflektiert werden kann und somit zu dem Lichtempfänger gelangen kann. Auch gemäß dieser Ausgestaltung kann ein korrespondierender Teilbereich des Deckels in einen in dem Griff ausgebildeten Öffnungsspalt eingreifen, wodurch die gewünschte optimale Positionierung von Deckel und Gefäß erkannt werden kann.

Schließlich wird vorgeschlagen, dass die Küchenmaschine eine automatische Verriegelungseinrichtung aufweist, welche ausgebildet ist, in Abhängigkeit von der mittels des Lichtempfängers gemessenen Lichtintensität eine Verriegelung zwischen dem ersten Teilbereich und dem zweiten Teilbereich der Küchenmaschine, insbesondere dem Gefäß und dem Deckel, herzustellen. Gemäß dieser Ausgestaltung erfolgt bei einer gewünschten korrekten Positionierung des ersten und zweiten Teilbereiches zueinander automatisch eine Verriegelung der beiden Teilbereiche. In diesem Sinne handelt es sich bei dem von dem Lichtempfänger detektierten Lichtsignal gleichzeitig um ein Signal zur Verriegelung der beiden Teilbereiche. Dadurch muss der Nutzer der Küchenmaschine für eine Verriegelung, bspw. eine Verriegelung des Deckels mit dem Gefäß, weniger Handgriffe verrichten als bisher im Stand der Technik üblich. Ein separater Tastendruck ist nicht mehr erforderlich, es genügt alleine, die beiden Teilbereiche korrekt zueinander zu positionieren. Handhabung und Bedienung der Küchenmaschine sind somit insgesamt besonders einfach gestaltet.

Im Folgenden wird die Erfindung anhand eines Ausführungsbeispiels näher erläutert. Es zeigen:

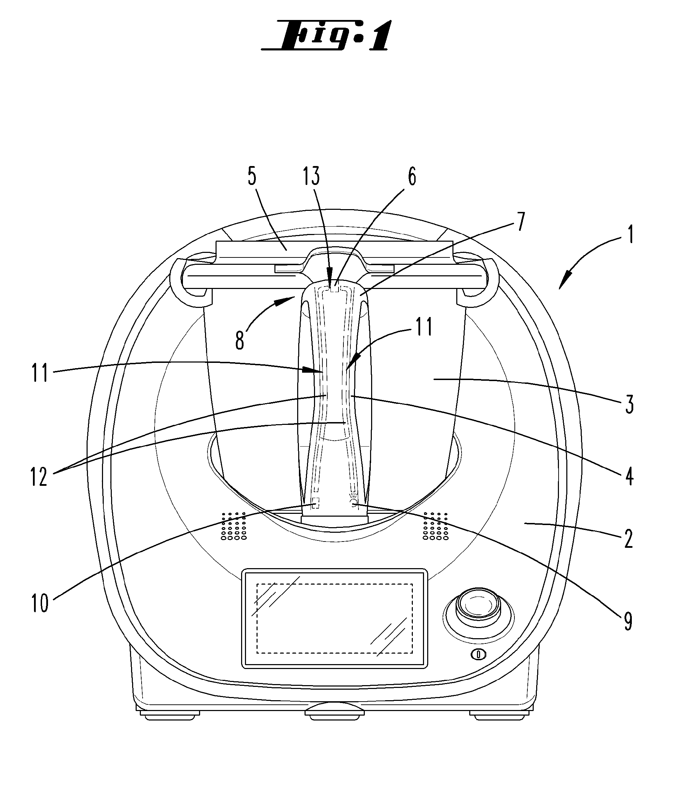

- Figur 1:: eine erfindungsgemäße Küchenmaschine mit einer optischen Messeinrichtung in einer ersten Ansicht,

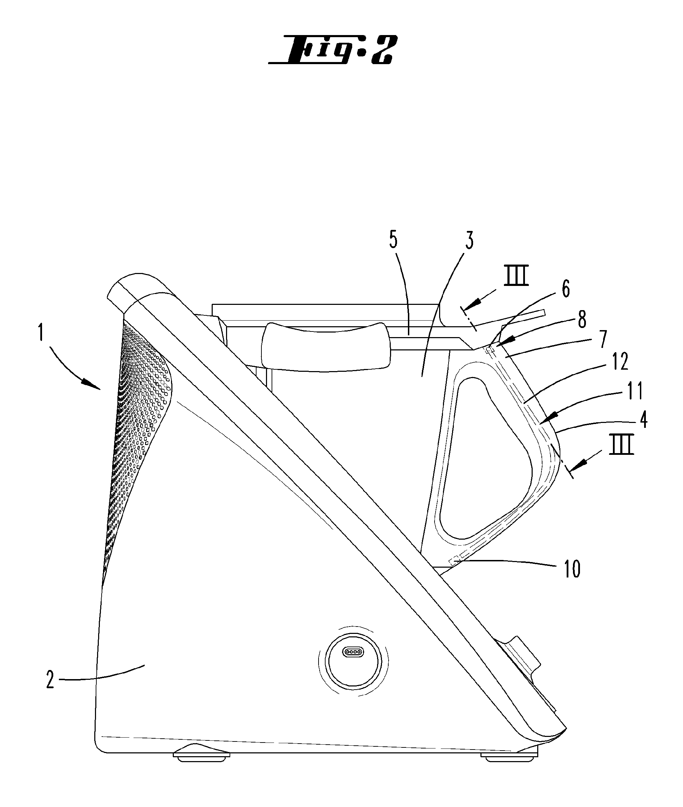

- Figur 2:: die in Figur 1 gezeigte Küchenmaschine in einer zweiten Ansicht,
- Figur 3:: die in den Figuren 1 und 2 gezeigte optische Messeinrichtung in einer Detailansicht.

Die dargestellte Küchenmaschine 1 weist ein Basisgerät 2 auf sowie ein an dem Basisgerät 2 angeordnetes Gefäß 3. Das Gefäß 3 weist einen Griff 4 auf und ist mit einem Deckel 5 verschlossen. An dem Deckel 5 ist ein erster Teilbereich 6 ausgebildet, welcher in einen an dem Griff 4 angeordneten zweiten Teilbereich 7 eingreift. Der erste Teilbereich 6 und der dazu formschlüssig korrespondierende zweite Teilbereich 7 bilden eine Positionierungseinrichtung 8. Der Positionierungseinrichtung 8 sind des Weiteren ein Lichtsender 9 sowie ein Lichtempfänger 10 zugeordnet. Der Lichtsender 9 und der Lichtempfänger 10 sind Elemente der optischen Messeinrichtung.

Zwischen dem Lichtsender 9 und dem Lichtempfänger 10 ist ein optischer Lichtweg 11 ausgebildet, entlang welchem das von dem Lichtsender 9 emittierte Licht in Richtung des Lichtempfängers 10 propagiert. Der Lichtweg 11 weist gemäß diesem Ausführungsbeispiel zwei Lichtleiter 12 auf, welche eine gemeinsame optische Achse aufweisen und durch einen Öffnungsspalt 13 voneinander beabstandet sind. Die beiden Lichtleiter 12 sind jeweils L-förmig gekrümmt, wobei die kurzen Schenkel so zueinander angeordnet sind, dass die beiden Lichtleiter 12 insgesamt eine U-Form bilden. In dem kurzen Schenkel des "U" ist der Öffnungsspalt 13 angeordnet. Der Öffnungsspalt 13 ist so positioniert und bemessen, dass der korrespondierende erste Teilbereich 6 des Deckels 5 in den Öffnungsspalt 13 eingreifen kann. Die von dem Öffnungsspalt 13 abgewandten Endbereiche der Lichtleiter 12 weisen zum einen den Lichtsender 9 und zum anderen den Lichtempfänger 10 auf.

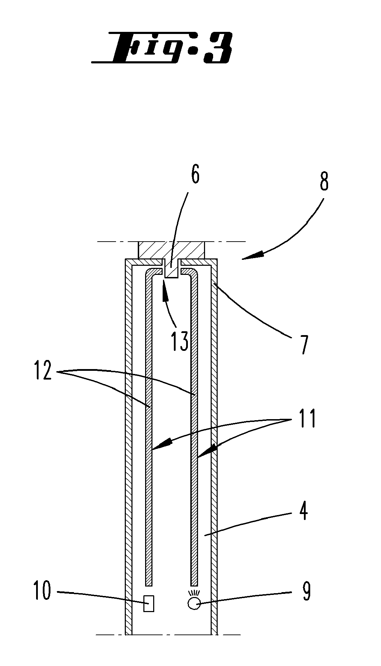

Die optische Messeinrichtung ist im Detail der Figur 3 zu entnehmen. Die Messeinrichtung ist nach dem Prinzip einer Lichtschranke ausgebildet. In den durch die beiden Lichtleiter 12 ausgebildeten Lichtweg 11 ist ein erster Teilbereich 6 eingreifbar, so dass das von dem Lichtsender 9 emittierte Licht nicht zu dem Lichtempfänger 10 gelangen kann.

Die Erfindung funktioniert so, dass der Nutzer der Küchenmaschine 1 das Gefäß 3 an dem Basisgerät 2 anordnet. Zum Verschließen des nach oben offenen Gefäßes 3 wird ein Deckel 5 an dem Gefäß 3 angeordnet. Sofern der Deckel 5 so zu dem Gefäß 3 ausgerichtet wird, dass der an dem Deckel 5 ausgebildete erste Teilbereich 6 optimal in den an dem Griff 4 des Gefäßes 3 angeordneten zweiten Teilbereich 7 eingreift, können Deckel 5 und Gefäß 3 so miteinander verriegelt werden, dass das Gefäß 3 insbesondere fluiddicht verschlossen ist.

Mittels der optischen Messeinrichtung kann überprüft werden, ob der erste Teilbereich 6 und der zweite Teilbereich 7 optimal zueinander positioniert sind, so dass eine Verriegelung erfolgreich durchgeführt werden kann.

Die optische Messeinrichtung funktioniert so, dass der Lichtsender 9 Licht emittiert, welches in einen dem Lichtsender 9 benachbarten Lichtleiter 12 eingekoppelt wird. Zum Zwecke der Einkopplung kann an der Eintrittsöffnung des Lichtleiters 12 eine Linse angeordnet sein. Das von dem Lichtsender 9 emittierte Licht propagiert innerhalb des Lichtleiters 12 zu der Austrittsöffnung und tritt dort - im Bereich des Öffnungsspaltes 13 - aus dem Lichtleiter 12 aus. Hinter dem Öffnungsspalt 13 koppelt das Licht in den zweiten Lichtleiter 12 ein und propagiert bis zu dem Lichtempfänger 10, welcher im Bereich der Austrittsöffnung des zweiten Lichtleiters 12 angeordnet ist.

Sofern der Nutzer den Deckel 5 ordnungsgemäß auf dem Gefäß 3 angeordnet hat, greift der erste Teilbereich 6 des Deckels 5 in den an dem Griff 4 des Gefäßes 3 angeordneten zweiten Teilbereich 7, konkret in den Öffnungsspalt 13 des Lichtweges 11, ein. Dadurch wird der Lichtweg 11 unterbrochen, so dass das von dem Lichtsender 9 emittierte Licht nicht zu dem Lichtempfänger 10 gelangen kann. Infolge dessen sinkt die von dem Lichtempfänger 10 gemessene Lichtintensität auf den Betrag Null. Daher kann darauf geschlossen werden, dass der Deckel 5 korrekt an dem Gefäß 3 angeordnet ist.

Daraufhin kann eine Information über die korrekte Positionierung an eine an der Küchenmaschine 1 angeordnete Verriegelungseinrichtung gesendet werden. Diese Verriegelungseinrichtung kann daraufhin eine automatische Verriegelung zwischen dem ersten Teilbereich 6 und dem zweiten Teilbereich 7, nämlich dem Gefäß 3 und dem Deckel 5, durchführen.

### Bezugszeichenliste:

- 1: Küchenmaschine
- 2: Basisgerät
- 3: Gefäß
- 4: Griff
- 5: Deckel
- 6: erster Teilbereich
- 7: zweiter Teilbereich
- 8: Positionierungseinrichtung
- 9: Lichtsender
- 10: Lichtempfänger
- 11: Lichtweg
- 12: Lichtleiter
- 13: Öffnungsspalt

## Patentansprüche

1. Küchenmaschine (1), insbesondere Mixgerät, aufweisend ein Basisgerät (2) und ein daran anordenbares Gefäß (3), wobei die Küchenmaschine (1) eine Positionierungseinrichtung (8) zur Positionierung eines ersten Teilbereiches (6) der Küchenmaschine (1) relativ zu einem zweiten Teilbereich (7) der Küchenmaschine (1) aufweist, **dadurch gekennzeichnet, dass** der Positionierungseinrichtung (8) eine optische Messeinrichtung mit einem Lichtsender (9) und einem Lichtempfänger (10) zugeordnet ist, welche so an dem ersten Teilbereich (6) und/oder dem zweiten Teilbereich (7) angeordnet sind, dass die von dem Lichtempfänger (10) gemessene Lichtintensität in Abhängigkeit von der Positionierung des ersten Teilbereiches (6) relativ zu dem zweiten Teilbereich (7) variiert.

2. Küchenmaschine (1) nach Anspruch 1, **dadurch gekennzeichnet, dass** der zweite Teilbereich (7) ein Teilbereich des Gefäßes (3), insbesondere eines Griffes (4) des Gefäßes (3), ist.

3. Küchenmaschine (1) nach Anspruch 1 oder 2, **dadurch gekennzeichnet, dass** der Lichtsender (9) und/ oder der Lichtempfänger (10) an dem zweiten Teilbereich (7) angeordnet ist.

4. Küchenmaschine (1) nach einem der vorhergehenden Ansprüche, **dadurch gekennzeichnet, dass** der erste Teilbereich (6) ein Teilbereich eines das Gefäß (3) verschließenden Deckels (5) ist.

5. Küchenmaschine (1) nach einem der vorhergehenden Ansprüche, **dadurch gekennzeichnet, dass** zwischen dem Lichtsender (9) und dem Lichtempfänger (10) ein Lichtweg (11) ausgebildet ist, in welchen der erste Teilbereich (6) oder der zweite Teilbereich (7) korrespondierend so eingreifbar ist, dass die von dem Lichtempfänger (10) gemessene Lichtintensität variiert.

6. Küchenmaschine (1) nach Anspruch 5, **dadurch gekennzeichnet, dass** der Lichtweg (11) durch mindestens einen Lichtleiter (12), insbesondere eine optische Faser, vorgegeben ist, wobei dem Lichtleiter (12) ein Öffnungsspalt (13) zugeordnet ist, in welchen der erste Teilbereich (6) oder der zweite Teilbereich (7) eingreifbar ist.

7. Küchenmaschine (1) nach Anspruch 6, **dadurch gekennzeichnet, dass** der Lichtweg (11) durch zwei Lichtleiter (12) vorgegeben ist, welche eine gemeinsame optische Achse aufweisen und durch den Öffnungsspalt (13) voneinander beabstandet sind.

8. Küchenmaschine (1) nach Anspruch 5, **dadurch gekennzeichnet, dass** der Lichtweg (11) durch eine das von dem Lichtsender (9) emittierte Licht reflektierende Wandung des ersten Teilbereiches (6) oder des zweiten Teilbereiches (7) vorgegeben ist, wobei der Wandung ein Öffnungsspalt (13) zugeordnet ist, in welchen der zweite Teilbereich (6) oder der erste Teilbereich (7) eingreifbar ist.

9. Küchenmaschine (1) nach einem der Ansprüche 6 bis 8, **dadurch gekennzeichnet, dass** der erste Teilbereich (6) so ausgebildet ist, dass dieser infolge der Anordnung des Deckels (5) an dem Gefäß (3) in den Öffnungsspalt (13) eingreifbar ist.

10. Küchenmaschine (1) nach einem der vorhergehenden Ansprüche, **gekennzeichnet durch** eine automatische Verriegelungseinrichtung, welche ausgebildet ist, in Abhängigkeit von der mittels des Lichtempfängers (10) gemessenen Lichtintensität eine Verriegelung zwischen dem ersten Teilbereich (6) und dem zweiten Teilbereich (7) der Küchenmaschine (1), insbesondere dem Gefäß (3) und dem Deckel (5), herzustellen.
